# EUROPEAN PATENT APPLICATION

(11) **EP 4 435 058 A1**
(43) Date of publication of application: **25.09.2024**
(21) Application number: 22892919.6
(22) Date of filing: 14.11.2022
(51) Int. Cl.: C08L 101/00, C08K 3/013, C08K 3/22, C08L 27/12, C08L 71/10

(54) **RESIN COMPOSITION, MOLDED OBJECT, COMPOSITE, AND USE THEREOF**

(30) Priority: 15.11.2021 JP 2021185690
(71) Applicant: AGC INC., Chiyoda-ku, Tokyo 1008405 (JP)
(72) Inventor: ABE, Masatoshi, Tokyo 1008405 (JP); SASAKI, Toru, Tokyo 1008405 (JP); NISHI, Mai, Tokyo 1008405 (JP); YODOGAWA, Masahide, Tokyo 1008405 (JP)
(74) Representative: Müller-Boré & Partner Patentanwälte PartG mbB
(86) International application number: PCT/JP2022/042199
(87) International publication number: WO 2023/085421

(57) **Abstract**

To provide a resin composition which can reduce the HF gas generation amount at the time of heat forming, which is excellent in heat resistance and which will not be colored; a formed product obtained by heat-forming the resin composition; a composite comprising the formed product, and use thereof.

A resin composition comprising a fluorinated polymer, a non-fluorinated thermoplastic resin and an inorganic compound, wherein the inorganic compound has an average particle size D50 of less than 4.5 µm, and the inorganic compound has neither carbon atom nor hydrogen atom; and a formed product obtained by heat-forming the resin composition.

## Description

### TECHNICAL FIELD

The present invention relates to a resin composition, a formed product, a composite and use thereof.

### BACKGROUND ART

Fluorinated polymers, which are excellent in heat resistance, chemical resistance and various other properties, are used in a wide range of fields. However, when fluorinated polymers are heat-formed, fluoride ions may be released from the fluorinated polymers and discharged. Accordingly, in heat-forming of fluorinated polymers, due to generation of corrosive hydrogen fluoride (HF) gas, the metal of e.g. the mold, production apparatus, etc. may be eroded.

In order to reduce the HF gas generation amount when the fluorinated polymer is heat-formed, an inorganic compound which functions as an acid acceptor may be incorporated in a resin composition (for example, Patent Documents 1 and 2).

Patent Document 1 describes a composition for producing a crosslinked ethylene-tetrafluoroethylene copolymer, comprising an ethylene-tetrafluoroethylene copolymer, a metal oxide selected from the group consisting of zinc oxide and magnesium oxide in an amount of from 0.1 to 10 mass%, and a crosslinking agent.

Patent Document 2 describes a fluorinated resin composition for wire covering material, which comprises a melt-formable fluorinated copolymer having a melting point of 250°C or higher, and at least one additive selected from the group consisting of magnesium oxide and calcium hydroxide in a content of 0.05 to 1.0 parts by mass per 100 parts by mass of the fluorinated copolymer.

### PRIOR ART DOCUMENTS

### PATENT DOCUMENTS

Patent Document 1: WO2016/210314
Patent Document 2: Japanese Patent No. 6638261

### DISCLOSURE OF INVENTION

### TECHNICAL PROBLEM

The fluorinated polymer is processed in many cases at high temperature. However, with the composition as described in Patent Documents 1 and 2, when processed at high temperature, the acid accepting function of the inorganic compound is weak, and the HF gas generation amount can not sufficiently be reduced. In addition, according to the studies by the present inventors, the resin compositions in Patent Documents 1 and 2 may sometimes be insufficient in heat resistance.

Further, a resin composition containing a fluorinated polymer may be colored. A colored resin composition is problematic in that it can hardly be used for applications which require optical transparency and its color can hardly be adjusted to e.g. white.

The present invention provides a resin composition which can reduce the HF gas generation amount at the time of heat forming, which is excellent in heat resistance and which will not be colored; a formed product obtained by heat-forming the resin composition; and a composite having the formed product, and use thereof.

### SOLUTION TO PROBLEM

The present invention provides the following.
[1] A resin composition comprising a fluorinated polymer, a non-fluorinated thermoplastic resin and an inorganic compound,
   wherein the inorganic compound has an average particle size D50 of less than 4.5 µm, and
   the inorganic compound has neither carbon atom nor hydrogen atom.
[2] The resin composition according to [1], wherein the content of the inorganic compound is 0.01 to 10 mass% to the total mass of the fluorinated polymer and the non-fluorinated thermoplastic resin.
[3] The resin composition according to [1] or [2], wherein the fluorinated polymer is a melt-formable fluorinated resin, and the fluorinated resin has a melting point of 230°C or higher.
[4] The resin composition according to [1] or [2], wherein the fluorinated polymer is a fluorinated elastomer.
[5] The resin composition according to any one of [1] to [4], wherein the non-fluorinated thermoplastic resin is at least one member selected from a polyamide, a polyphenylene sulfide, a polysulfone, a thermoplastic polyimide, a polyetherimide, a polycarbonate, a liquid crystal polymer, a polyarylate and a polyaryl ether ketone.
[6] The resin composition according to any one of [1] to [5], wherein the non-fluorinated thermoplastic resin is a polyaryl ether ketone.
[7] The resin composition according to any one of [1] to [6], wherein the non-fluorinated thermoplastic resin has a melting point of 230°C or higher.
[8] The resin composition according to any one of [1] to [7], wherein the non-fluorinated thermoplastic resin has a melting point of 250°C or higher.
[9] The resin composition according to any one of [1] to [8], wherein the inorganic compound has a BET specific surface area of 100 m²/g or more.
[10] The resin composition according to any one of [1] to [9], wherein the inorganic compound is magnesium oxide, and the purity of the magnesium oxide is 98% or higher.
[11] The resin composition according to any one of [1] to [10], wherein the content of the fluorinated polymer is 1 to 40 mass% to the total mass of the fluorinated polymer and the non-fluorinated thermoplastic resin.
[12] The resin composition according to any one of [1] to [11], wherein the following HF gas generation amount is 200 ppm or less:
   HF gas generation amount: the HF out gas amount generated when 1 g of the resin composition is heated at a temperature of 380°C or 400°C for 30 minutes, measured by ion chromatography.
[13] The resin composition according to any one of [1] to [12], wherein the 1% heat loss temperature T_{1%} is 450°C or higher, and the 5% heat loss temperature T_{5%} is 470°C or higher, measured in accordance with JIS K7120.
[14] A formed product obtained by heat-forming the resin composition as defined in any one of [1] to [13].
[15] A composite, comprising the formed product as defined in [14] combined or laminated with another material other than the formed product.

### ADVANTAGEOUS EFFECTS OF INVENTION

The resin composition of the present invention is excellent in heat resistance, can reduce the HF gas generation amount at the time of heat forming, and will not be colored.

The formed product of the present invention generates less HF gas when produced by heat forming, is excellent in heat resistance and will not be colored.

The composite of the present invention has a formed product excellent in heat resistance.

### DESCRIPTION OF EMBODIMENTS

Meanings of terms in the present specification are as follows.

A compound represented by the formula 1 will be referred to as "compound 1". The same applies to compounds represented by other formulae.

A "monomer" means a compound having a polymerizable carbon-carbon double bond.

"Units based on a monomer" generally mean an atomic group formed directly by polymerization of one molecule of a monomer and an atomic group obtained by chemical conversion of a part of the atomic group.

Units based on a monomer will be referred to simply as "monomer units". For example, units based on ethylene will be referred to as "ethylene units"

"Melt-formable" means having melt flowability.

"Having melt flowability" means that at a temperature higher by 20°C or more than the melting point of a resin under a load of 49N, there is a temperature at which the melt flow rate is 0.1 to 1,000 g/10 min.

"Melting point" is a temperature corresponding to the maximum value of the melting peak measured by differential scanning calorimetry (DSC).

"Melt flow rate" is the melt mass flow rate (MFR) as specified by JIS K7210-1:2014 (corresponding International Organization for Standardization ISO 1133-1:2011). MFR is measured at a temperature of 372°C under a load of 49N.

A "carbonyl group-containing group" means a group having a carbonyl group (-C(=O)-) in its structure.

An "acid anhydride group" means a group represented by -C(=O)-O-C(=O)-.

The "main chain" means a chief carbon chain of a chain compound, which is a portion of a main line with the maximum carbon number.

The "storage elastic modulus G‴ is a value measured in accordance with ASTM D6204 at 100°C under 50 cpm.

The "Mooney viscosity (ML₁₊₁₀, 121°C)" is a value measured in accordance with JIS K6300-1:2000 (corresponding International Organization for Standardization ISO 289-1:2005, ISO 289-2:1994) at 121°C.

The "specific gravity" is a value measured by underwater replacement (suspension) method at 23°C.

The "number average particle size" is an average of maximum diameters of randomly selected 100 particles by optical microscopic observation.

The "average particle size D50 of an inorganic compound" is a volume based cumulative 50% particle size (D50) measured by laser diffraction/scattering. That is, the particle size distribution is measured by laser diffraction/scattering, a cumulative curve is obtained by taking the total volume of the group of particles as 100%, and the particle size at the 50% cumulative volume on the cumulative curve is taken as the average particle size D50.

The "BET specific surface area of an inorganic compound" is a value measured by gas adsorption method.

The "HF gas generation amount" is the amount of HF out gas generated when 1 g of a resin composition is heated at 380°C or 400°C for 30 minutes, measured by ion chromatography. The HF out gas amount is measured by the method described in Examples.

The "1% heat loss temperature T_{1%}" and the "5% heat loss temperature T_{5%}" are values measured in accordance with JIS K7120 (corresponding International Organization for Standardization ISO 7111-1987).

" to " indicating the range of numerical values means that values before and after it are included as lower limit value and upper limit value.

### <Resin composition>

The resin composition of the present invention comprises a fluorinated polymer, a non-fluorinated thermoplastic resin and an inorganic compound. The resin composition of the present invention may further include components other than the fluorinated polymer, the non-fluorinated thermoplastic resin and the inorganic compound.

### (Fluorinated polymer)

The fluorinated polymer may be a melt-formable fluorinated resin A or a fluorinated elastomer B.

As the fluorinated resin A, one capable of melt-forming is used. That is, as the fluorinated resin A, one such that there is a temperature at which the melt flow rate becomes 0.1 to 1,000 g/10 min at a temperature higher by 20°C or more than the melting point of the fluorinated resin A under a load of 49N, is used.

The melting point of the fluorinated resin A is preferably 230°C or higher, more preferably 240°C or higher, further preferably 245°C or higher, particularly preferably 250°C or higher, most preferably 260°C or higher. When the melting point of the fluorinated resin A is the lower limit value or higher, the resin composition and the resulting formed product will be more excellent in heat resistance.

The melting point of the fluorinated resin A is preferably 360°C or lower, more preferably 350°C or lower, further preferably 340°C or lower, still more preferably 320°C or lower, still more preferably 300°C or lower, still more preferably 295°C or lower, particularly preferably 290°C or lower, most preferably 280°C or lower. When the melting point of the fluorinated resin A is the upper limit value or lower, a general-purpose apparatus will be used for production of the resin composition and the formed product.

The melting point of the fluorinated resin A may be adjusted by the type and the content of units constituting the fluorinated resin A, the molecular weight, etc.

As the fluorinated resin A, various melt-formable fluorinated resins may be mentioned. For example, polyvinylidene fluoride, polychlorotrifluoroethylene, a copolymer having ethylene units and tetrafluoroethylene (hereinafter referred to as "TFE") units (hereinafter referred to as "ETFE"), a copolymer having TFE units and hexafluoropropylene (hereinafter referred to as "HFP") units (hereinafter referred to as "FEP"), a copolymer having TFE units and fluoroalkyl vinyl ether units (hereinafter referred to as "PFA"), and a copolymer having ethylene units and chlorotrifluoroethylene (hereinafter referred to as "CTFE") units, may be mentioned. However, it should be understood that the fluorinated resin A is not limited to such specific examples.

The fluorinated resin A may be used alone or in combination of two or more.

Particularly, the melt-formable fluorinated resin A is preferably at least one member selected from the group consisting of ETFE, FEP and PFA.

ETFE has TFE units and ethylene units.

The molar ratio of the TFE units to the ethylene units (TFE units/ethylene units) in ETFE is preferably 45/55 to 65/35, more preferably 47/53 to 63/37, further preferably 50/50 to 61/39.

When the molar ratio (TFE units/ethylene units) is the lower limit of the above range or higher, the ratio of the TFE units tends to be high and the melting point of ETFE tends to be high. Accordingly, it is more meaningful to reduce the HF gas generation which is likely to occur at high temperature (for example 230°C or higher). Further, the resin composition and the resulting formed product will be more excellent in heat resistance.

When the molar ratio (TFE units/ethylene units) is the upper limit of the above range or lower, the resin composition will be excellent in formability.

The melting point of ETFE is preferably 230 to 300°C, more preferably 240 to 295°C, further preferably 250 to 290°C. When the melting point of ETFE is the lower limit of the above range or higher, the resin composition and the resulting formed product will be more excellent in heat resistance. When the melting point of ETFE is the upper limit of the above range or lower, a general-purpose apparatus will be used for production of the resin composition and the formed product.

FEP has TFE units and HFP units.

The molar ratio of the TFE units to the HFP units (TFE units/HFP units) in FEP is preferably 80/20 to 99/1, more preferably 83/17 to 97/3, further preferably 85/15 to 90/10.

When the molar ratio (TFE units/HFP units) is the lower limit of the above range or higher, the ratio of the TFE units tends to be high, and the melting point of FEP tends to be high. Accordingly, it is more meaningful to reduce the HF gas generation which is likely to occur at high temperature (for example 230°C or higher). Further, the resin composition and the resulting formed product will be more excellent in heat resistance.

When the molar ratio (TFE units/HFP units) is the upper limit of the above range or lower, the resin composition will be excellent in formability.

The melting point of FEP is preferably 200 to 350°C, more preferably 220 to 320°C, further preferably 250 to 280°C. When the melting point of FEP is the lower limit of the above range or higher, the resin composition and the formed product will be more excellent in heat resistance. When the melting point of FEP is the upper limit of the above range or lower, a general-purpose apparatus will be used for production of the resin composition and the formed product.

PFA has TFE units and fluoroalkyl vinyl ether units.

As the fluoroalkyl vinyl ether, for example, the following compound 1 may be mentioned.

CF₂=CF(OR^{f}) Formula 1

In the formula 1, R^{f} is a C₁₋₁₀ fluoroalkyl group.

The fluoroalkyl vinyl ether is preferably a perfluoro(alkyl vinyl ether) (hereinafter sometimes referred to as "PAVE"), in view of more excellent heat resistance.

The molar ratio of the TFE units to the fluoroalkyl vinyl ether units (TFE units/fluoroalkyl vinyl ether units) in PFA is preferably 92/8 to 99/1, more preferably 93/7 to 99/1, further preferably 94/6 to 98.5/1.5.

When the molar ratio (TFE units/fluoroalkyl vinyl ether units) is the lower limit of the above range or higher, the ratio of the TFE units tends to be high, and the melting point of PFA tends to be high. Accordingly, it is more meaningful to reduce the HF gas generation which is likely to occur at high temperature (for example 230°C or higher). Further, the resin composition and the resulting formed product will be more excellent in heat resistance.

When the molar ratio (TFE units/fluoroalkyl vinyl ether units) is the upper limit of the above range or lower, the resin composition will be excellent in formability.

The melting point of PFA is preferably 230 to 360°C, more preferably 245 to 350°C, further preferably 260 to 340°C. When the melting point of PFA is the lower limit of the above range or higher, more excellent heat resistance will be achieved. When the melting point of PFA is the upper limit of the above range or lower, a general-purpose apparatus will be used for production of the resin composition and the formed product.

ETFE, FEP and PFA may have units based on another monomer.

ETFE may have units based on a monomer other than ethylene and TFE.

FEP may have units based on a monomer other than TFE and HFP.

PFA may have units based on a monomer other than TFE and the fluoro(alkyl vinyl ether).

As other monomer, for example, HFP (excluding a case where the fluorinated resin A is FEP), a fluoroalkyl vinyl ether (excluding a case where the fluorinated resin A is PFA), a fluoroalkyl ethylene (preferably a perfluoroalkyl ethylene with a number of carbon atoms of 1 to 10 in the alkyl group), a fluoroalkyl allyl ether (preferably a perfluoroalkyl allyl ether with a number of carbon atoms of 1 to 10 in the alkyl group, and the following compound 2 may be mentioned.

CF₂=CF[OCF_{2CF}(CF₃)]ₙOCF₂(CF₂)ₚX formula 2

In the formula 2, X is a halogen atom, n is an integer of 0 to 5, and p is an integer of 0 to 2.

The proportion of the units based on other monomer is, to the total (100 mol%) of all units in PFA, FEP or ETFE, preferably 50 mol% or less, more preferably 0.01 to 5 mol%.

The fluorinated resin A may have at least one functional group (hereinafter referred to as "functional group g1") selected from the group consisting of a carbonyl group-containing group, a hydroxy group, an epoxy group and an isocyanate group. The functional group g1 is present as one or both of the main chain terminal group and the main chain pendant group of the fluorinated resin A.

The carbonyl group-containing group may, for example, be a group having a carbonyl group between carbon atoms in a hydrocarbon group, a carbonate group, a carboxy group, a haloformyl group, an alkoxycarbonyl group or an acid anhydride group.

The functional group g1 may be used alone or in combination of two or more.

The fluorinated resin A may be a commercial product or may be synthesized from various materials by various methods.

When the fluorinated resin A is synthesized by polymerization of a monomer, the polymerization method is preferably a polymerization method using a radical polymerization initiator.

The polymerization method may, for example, be bulk polymerization, solution polymerization using an organic solvent such as a fluorinated hydrocarbon, a chlorinated hydrocarbon, a chlorofluorohydrocarbon, an alcohol or a hydrocarbon; suspension polymerization using an aqueous medium and a proper organic solvent as the case requires; or emulsion polymerization using an aqueous medium and an emulsifier. Among them, solution polymerization is preferred.

The fluorinated elastomer B is a fluorinated elastic copolymer having no melting point, which has a storage elastic modulus G' of 80 or more at 100°C under 50 cpm, and is distinguished from the fluorinated resin A. In a case where the resin composition contains the fluorinated elastomer B, the resin composition and the resulting formed product will be excellent in impact resistance.

The fluorinated elastomer B is preferably a fluorinated elastic copolymer having at least one type of units based on the following monomer m1.

The monomer m1 is at least one monomer selected from the group consisting of TFE, HFP, vinylidene fluoride (hereinafter sometimes referred to as "VdF") and CTFE.

Although the fluorinated elastomer B may be used in combination of two or more, it is preferably used alone.

The fluorinated elastomer B may be a fluorinated elastic copolymer having two or more types of the monomer m1 units, or may be a fluorinated elastic copolymer having one or more types of the monomer m1 units and one or more types of units based on the following monomer m2 copolymerizable with the monomer m1.

The monomer m2 is at least one monomer selected from the group consisting of ethylene (hereinafter sometimes referred to as "E"), propylene (hereinafter sometimes referred to as "P"), PAVE, vinyl fluoride (hereinafter sometimes referred to as "VF"), 1,2-difluoroethylene (hereinafter sometimes referred to as "DiFE"), 1,1,2-trifluoroethylene (hereinafter sometimes referred to as "TrFE"), 3,3,3-trifluoro-1-propylene (hereinafter sometimes referred to as "TFP"), 1,3,3,3-tetrafluoropropylene and 2,3,3,3-tetrafluoropropylene.

PAVE is the following compound 3.

CF₂=CF(OR^{F}) formula 3

In the formula 3, R^{F} is a C₁₋₁₀ linear or branched perfluoroalkyl group.

PAVE may, for example, be perfluoro(methyl vinyl ether) (hereinafter sometimes referred to as "PMVE"), perfluoro(ethyl vinyl ether), perfluoro(propyl vinyl ether) (hereinafter sometimes referred to as "PPVE") or perfluoro(butyl vinyl ether). Among them, PAVE is preferably PMVE or PPVE, more preferably PMVE. PAVE may be used alone or in combination of two or more.

The fluorinated elastomer B may have at least one type of units based on a monomer other than the monomer m1 and the monomer m2 (hereinafter sometimes referred to as "monomer m3"), which is copolymerizable with the monomer m1 and which produces an elastic copolymer when copolymerized with the monomer m1.

The proportion of the monomer m3 units is, to all units constituting the fluorinated elastomer B, preferably 20 mol% or less, more preferably 5 mol% or less, particularly preferably 0 mol%.

The fluorinated elastomer B is preferably such that all units constituting the fluorinated elastomer B consist of two or three types of the monomer m1 units, or one or more types of the monomer m1 units and one or more types of the monomer m2 units. However, within a range not to affect the properties of the resin composition, the fluorinated elastomer B may have other units e.g. as impurities.

As examples of the fluorinated elastomer B, the following three copolymers may be mentioned.
- A copolymer having TFE units and P units.
- A copolymer having HFP units and VdF units (excluding one having P units)
- A copolymer having TFE units and PAVE units (excluding one having P units or VdF units).

In such three copolymers, the total proportion of the specifically identified units is preferably 50 mol% or more to all units constituting each copolymer.

As the copolymer having TFE units and P units, the following copolymers may, for example, be mentioned.

A copolymer formed of TFE units and P units,
a copolymer formed of TFE units, P units and VF units,
a copolymer formed of TFE units, P units and VdF units,
a copolymer formed of TFE units, P units and E units,
a copolymer formed of TFE units, P units and TFP units,
a copolymer formed of TFE units, P units and PAVE units,
a copolymer formed of TFE units, P units and 1,3,3,3-tetrafluoropropene units,
a copolymer formed of TFE units, P units and 2,3,3,3-tetrafluoropropene units,
a copolymer formed of TFE units, P units and TrFE units,
a copolymer formed of TFE units, P units and DiFE units,
a copolymer formed of TFE units, P units, VdF units and TFP units,
a copolymer formed of TFE units, P units, VdF units and PAVE units.

Among them, as the copolymer having TFE units and P units, a copolymer formed of TFE units and P units is preferred.

As the copolymer having HFP units and VdF units, the following copolymers may be mentioned.

A copolymer formed of HFP units and VdF units,
a copolymer formed of TFE units, VdF units and HFP units,
a copolymer formed of TFE units, VdF units, HFP units and TFP units,
a copolymer formed of TFE units, VdF units, HFP units and PAVE units,
a copolymer formed of VdF units, HFP units and TFP units,
a copolymer formed of VdF units, HFP units and PAVE units.

Among them, as the copolymer having HFP units and VdF units, a copolymer formed of HFP units and VdF units is preferred.

As the copolymer having TFE units and PAVE units, a copolymer formed of TFE units and PAVE units may be mentioned. Among them, a copolymer formed of TFE units and PMVE units and a copolymer formed of TFE units, PMVE units and PPVE units are preferred, and a copolymer formed of TFE units and PMVE units is more preferred.

As other examples of the fluorinated elastomer B, the following may also be mentioned.

A copolymer formed of TFE units, VdF units and 2,3,3,3-tetrafluoropropylene units,
a copolymer formed of VdF units and PAVE units,
a copolymer formed of VdF units and 2,3,3,3-tetrafluoropropylene units,
a copolymer formed of E units and HFP units.

As the fluorinated elastomer B, a copolymer having TFE units and P units, a copolymer having HFP units and VdF units and a copolymer having TFE units and PAVE units are preferred, a copolymer having TFE units and P units is more preferred, and a copolymer formed of TFE units and P units is particularly preferred.

A copolymer formed of TFE units and P units has favorable thermal stability at the time of melt-kneading, and is good at transportability at the time of melt-kneading. Further, coloring and foaming of the resulting formed product will be reduced.

The ratio of the respective units constituting the fluorinated elastomer B is preferably within the following range, so as to improve impact resistance of the formed product.

In the copolymer formed of TFE units and P units, the molar ratio of the respective units (hereinafter referred to as "TFE:P", and the same applies to the other molar ratios) is preferably 30 to 80:70 to 20, more preferably 40 to 70:60 to 30, further preferably 50 to 60:50 to 40.

In the copolymer formed of TFE units, P units and VF units, TFE:P:VF is preferably 30 to 60:60 to 20:0.05 to 40.

In the copolymer formed of TFE units, P units and VdF units, TFE:P:VdF is preferably 30 to 60:60 to 20:0.05 to 40.

In the copolymer formed of TFE units, P units and E units, TFE:P:E is preferably 20 to 60:70 to 30:0.05 to 40.

In the copolymer formed of TFE units, P units and TFP units, TFE:P:TFP is preferably 30 to 60:60 to 30:0.05 to 20.

In the copolymer formed of TFE units, P units and PAVE units, TFE:P:PAVE is preferably 40 to 70:60 to 29.95:0.05 to 20.

In the copolymer formed of TFE units, P units and 1,3,3,3-tetrafluoropropene units, TFE:P:1,3,3,3-tetrafluoropropene is preferably 30 to 60:60 to 20:0.05 to 40.

In the copolymer formed of TFE units, P units and 2,3,3,3-tetrafluoropropene units, TFE:P:2,3,3,3-tetrafluoropropene is preferably 30 to 60:60 to 20:0.05 to 40.

In the copolymer formed of TFE units, P units and TrFE units, TFE:P:TrFE is preferably 30 to 60:60 to 20:0.05 to 40.

In the copolymer formed of TFE units, P units and DiFE units, TFE:P:DiFE is preferably 30 to 60:60 to 20:0.05 to 40.

In the copolymer formed of TFE units, P units, VdF units and TFP units, TFE:P:VdF:TFP is preferably 30 to 60:60 to 20:0.05 to 40:0.05 to 20.

In the copolymer formed of TFE units, P units, VdF units and PAVE units, TFE:P:VdF:PAVE is preferably 30 to 70:60 to 20:0.05 to 40:0.05 to 20.

In the copolymer formed of HFP units and VdF units, HFP:VdF is preferably 99 to 5:1 to 95.

In the copolymer formed of TFE units, VdF units and HFP units, TFE:VdF:HFP is preferably 20 to 60:1 to 40:20 to 60.

In the copolymer formed of TFE units, VdF units, HFP units and TFP units, TFE:VdF:HFP:TFP is preferably 30 to 60:0.05 to 40:60 to 20:0.05 to 20.

In the copolymer formed of TFE units, VdF units, HFP units and PAVE units, TFE:VdF:HFP:PAVE is preferably 30 to 70:60 to 20:0.05 to 40:0.05 to 20.

In the copolymer formed of VdF units, HFP units and TFP units, VdF:HFP:TFP is preferably 1 to 90:95 to 5:0.05 to 20.

In the copolymer formed of VdF units, HFP units and PAVE units, VdF:HFP:PAVE is preferably 20 to 90:9.95 to 70:0.05 to 20.

In the copolymer formed of TFE units and PAVE units, TFE:PAVE is preferably 40 to 70:60 to 30. In the copolymer formed of TFE units and PMVE units, TFE:PMVE is preferably 40 to 70:60 to 30.

In the copolymer formed of TFE units, PMVE units and PPVE units, TFE:PMVE:PPVE is preferably 40 to 70:3 to 57:3 to 57.

In the copolymer formed of TFE units, VdF units and 2,3,3,3-tetrafluoropropylene units, TFE:VdF:2,3,3,3-tetrafluoropropylene is preferably 1 to 30:30 to 90:5 to 60.

In the copolymer formed of VdF units and PAVE units, VdF:PAVE is preferably 3 to 95:97 to 5.

In the copolymer formed of VdF units and 2,3,3,3-tetrafluoropropylene units, VdF:2,3,3,3-tetrafluoropropylene is preferably 30 to 95:70 to 5.

In the copolymer formed of E units and HFP units, E:HFP is preferably 40 to 60:60 to 40.

The fluorine content in the fluorinated elastomer B is preferably 50 to 74 mass%, more preferably 55 to 70 mass%. The fluorine content is preferably 57 to 60 mass% in the copolymer formed of TFE units and P units, preferably 66 to 71 mass% in the copolymer formed of HFP units and VdF units, and preferably 66 to 70 mass% in the copolymer formed of TFE units and PMVE units. When the fluorine content is the lower limit of the above range or higher, the resin composition and the resulting formed product will be more excellent in heat resistance and chemical resistance. When the fluorine content is the upper limit of the above range or lower, the resin composition and the resulting formed product will be more excellent in impact resistance.

The fluorine content in the fluorinated elastomer B may be obtained by fluorine content analysis. The fluorine content in the fluorinated elastomer B means the proportion of the mass of fluorine atoms to the total mass of all atoms constituting the fluorinated elastomer B. The fluorine content is calculated from the molar ratio of the respective units in the fluorinated elastic copolymer obtained by melt NMR measurement and total fluorine content measurement.

The storage elastic modulus G' of the fluorinated elastomer B is preferably 80 to 700, more preferably 90 to 600, further preferably 100 to 500. A higher storage elastic modulus G' indicates a higher molecular weight of the fluorinated elastomer B and a higher density of entanglement of molecular chains. When the storage elastic modulus G' of the fluorinated elastomer B is within the above range, the resulting formed product will be excellent in physical properties such as tensile strength.

The Mooney viscosity (ML₁₊₁₀, 121°C) of the fluorinated elastomer B is preferably 10 to 300, more preferably 20 to 280, further preferably 30 to 250. The Mooney viscosity is an indicator of the molecular weight. A higher Mooney viscosity indicates a higher molecular weight. A lower Mooney viscosity indicates a lower molecular weight.

When the Mooney viscosity (ML₁₊₁₀, 121°C) the fluorinated elastomer B is the lower limit of the above range or higher, the resin composition and the resulting formed product will be excellent in impact resistance and mechanical properties. When the Mooney viscosity (ML₁₊₁₀, 121°C) of the fluorinated elastomer B is the upper limit of the above range or lower, the fluorinated elastomer B will be excellent in flowability and excellent in dispersibility in the non-fluorinated thermoplastic resin, and resultingly, the resin composition will be excellent in formability.

The fluorinated elastomer B is preferably dispersed in the non-fluorinated thermoplastic resin. In a case where the fluorinated elastomer B is dispersed in the non-fluorinated thermoplastic resin, the number average particle size of the fluorinated elastomer B is preferably 0.1 to 200 µm, more preferably 0.2 to 50 µm, further preferably 0.3 to 10 µm. When the number average particle size of the fluorinated elastomer B is the lower limit of the above range or higher, the resin composition will be excellent in formability, and the resulting formed product will be excellent in impact resistance. When the number average particle size of the fluorinated elastomer B is the upper limit of the above range or lower, the fluorinated elastomer B will be excellent in dispersion uniformity.

The fluorinated elastomer B may be a commercial product or may be synthesized from various materials by various methods.

The fluorinated elastomer B may be synthesized, for example, by polymerizing one or more types of the monomer m1 and as the case requires, one or more types of either one or both of the monomer m2 and the monomer m3.

The polymerization method may, for example, be emulsion polymerization, solution polymerization, suspension polymerization or bulk polymerization. Emulsion polymerization in which monomers are polymerized in the presence of an aqueous medium and an emulsifier is preferred, since the number average molecular weight of the fluorinated elastic copolymer and the copolymer composition will easily be adjusted and excellent productivity will be achieved.

In emulsion polymerization, monomers are polymerized in the presence of an aqueous medium, an emulsifier and a radical polymerization initiator to obtain an elastomer latex. A pH adjusting agent may be added at the time of polymerization of the monomers.

### (Non-fluorinated thermoplastic resin)

The non-fluorinated thermoplastic resin is a thermoplastic resin having no fluorine atom. The non-fluorinated thermoplastic resin may be any thermoplastic resin other than the fluorinated polymer and is not particularly limited.

The melting point of the non-fluorinated thermoplastic resin is preferably 230°C or higher, more preferably 250°C or higher, further preferably 260°C or higher. The upper limit of the melting point of the non-fluorinated thermoplastic resin is not particularly limited and may, for example, be 500°C. When the melting point of the non-fluorinated thermoplastic resin is the lower limit of the above range or higher, the resin composition and the resulting formed product will be more excellent in heat resistance. When the melting point of the non-fluorinated thermoplastic resin is the upper limit of the above range or lower, the resin composition will be excellent in formability.

The non-fluorinated thermoplastic resin may, for example, be a crystalline resin, an amorphous resin or a thermoplastic elastomer (excluding the fluorinated elastomer B), or other thermoplastic resin (excluding the fluorinated resin A).

The non-fluorinated thermoplastic resin may be used alone or in combination of two or more, but is preferably used alone.

The crystalline resin may, for example, be a polyester (such as polyethylene terephthalate, polybutylene terephthalate, polytrimethylene terephthalate, polyethylene naphthalate or liquid crystal polyester), a polyolefin (such as polyethylene, polypropylene, polybutylene, acid-modified polyethylene, acid-modified polypropylene or acid-modified polybutylene), a polyoxymethylene, a polyamide, a polyarylene sulfide (such as polyphenylene sulfide), a polyketone, a polyaryl ether ketone (hereinafter sometimes referred to as "PAEK"), a polyether nitrile or a liquid crystal polymer.

The amorphous resin may, for example, be a styrene resin (such as a polystyrene, an acrylonitrile styrene resin, a butadiene styrene resin or an acrylonitrile butadiene styrene resin), a polycarbonate, a polymethyl methacrylate, a polyvinyl chloride, a non-modified or modified polyphenylene ether, a thermoplastic polyimide, a polyamide imide, a polyether imide, a polysulfone, a polyether sulfone or a polyarylate.

The thermoplastic elastomer may, for example, be a polystyrene elastomer, a polyolefin elastomer, a polyurethane elastomer, a polyester elastomer, a polyamide elastomer, a polybutadiene elastomer, a polyisoprene elastomer, an acrylonitrile elastomer, an acrylic elastomer or a fluorinated elastomer (excluding the fluorinated resin A and the fluorinated elastomer B).

Other thermoplastic resin may, for example, be a polycaprolactone resin, a phenoxy resin or a thermoplastic epoxy resin.

The non-fluorinated thermoplastic resin is preferably at least one member selected from a polyamide, a polyphenylene sulfide (PPS), a polysulfone, a thermoplastic polyimide, a polyetherimide, a polycarbonate, a liquid crystal polymer, a polyarylate and PAEK, and in view of mechanical properties and heat resistance, PAEK is more preferred.

PAEK may, for example, be a polyether ether ketone (hereinafter referred to as "PEEK"), a polyether ketone (hereinafter referred to as "PEK") or polyether ketone ketone (hereinafter referred to as "PEKK").

PAEK is, in view of mechanical properties and heat resistance, preferably PEK, PEEK or PEKK, more preferably PEEK.

Although PAEK may be used in combination of two or more, it is used preferably alone.

The melting point of PAEK is, for example, preferably 280°C or higher, more preferably 340°C or higher, further preferably 343°C or higher. Further, the melting point of PAEK is preferably 420°C or lower, more preferably 380°C or lower, further preferably 360°C or lower. When the melting point of PAEK is the lower limit of the above range or higher, the resin composition and the resulting formed product will be more excellent in physical properties such as heat resistance and strength. When the melting point of PAEK is the upper limit of the above range or lower, the resin composition will be excellent in formability.

PAEK may be a commercial product or may be synthesized from various materials by various methods. Commercial products of PEEK include VictrexPEEK (manufactured by Victrex), VESTAKEEP series (manufactured by Daicel-Evonik Ltd.), Ketaspire (manufactured by Solvay specailty polymers), etc. Commercial products of PEKK include Kepstan (manufactured by Arkema), etc.

### (Inorganic compound)

The inorganic compound has neither carbon atom nor hydrogen atom. The inorganic compound is not particularly limited so long as it can function as an acid acceptor. That is, the inorganic compound is not particularly limited so long as it is an inorganic compound which captures an acid by incorporating an acid such as HF gas or neutralizing the acid and which has neither carbon atom nor hydrogen atom.

The inorganic compound may, for example, be magnesium oxide, calcium oxide, zinc oxide, titanium oxide, lead oxide, copper oxide or copper iodide.

Among them, as the inorganic compound, magnesium oxide which is likely to reduce the HF gas generation amount and which will be more excellent in heat resistance is preferred, magnesium oxide with a purity of 98% or higher is more preferred. The purity of magnesium oxide is more preferably 99% or higher. The upper limit of the purity of magnesium oxide is not particularly limited and is usually 100%.

The average particle size D50 of the inorganic compound is less than 4.5 µm, preferably 3.0 µm or less, more preferably 1.0 µm or less. When the average particle size D50 of the inorganic compound is the upper limit of the above range or less, the resin composition of the present invention is excellent in heat resistance, and the HF gas generation amount at the time of heat forming can be reduced.

The BET specific surface area of the inorganic compound is preferably 100 m²/g or more, more preferably 105 m²/g or more, further preferably 110 m²/g or more. When the BET specific surface area of the inorganic compound is the lower limit of the above range or higher, it is considered that more excellent heat resistance will be achieved, and the HF gas generation amount can further be reduced. The upper limit of the BET specific surface area of the inorganic compound is not particularly limited and may, for example, be 300 m²/g.

The inorganic compound may be used alone or in combination of two or more. It is preferred to use magnesium oxide alone, whereby more excellent heat resistance will be achieved and the HF gas generation amount can further be reduced.

### (Other component)

As other component, an inorganic filler (excluding the inorganic compound), a polymer filler (excluding the fluorinated polymer and the non-fluorinated thermoplastic resin), a plasticizer and a flame retardant may be mentioned. Such other components may be used alone or in combination of two or more.

The inorganic filler may, for example, be glass fiber, carbon fiber, graphite, graphene, carbon nanotubes, satin spar, mica, talc, glass flakes, wollastonite, potassium titanate, aluminum borate, boron nitride, aluminum nitride, calcium carbonate, silicon oxide (silica), barium sulfate, aluminum hydroxide, magnesium hydroxide, clay, white carbon, carbon black, an inorganic pigment, molybdenum disulfide, a metal power, a magnetic material or zeolite.

The glass fiber may, for example, be chopped fiber, milled fiber or flat glass fiber having a modified cross-section. Further, in view of electric property, glass fiber having a low dielectric constant may be used.

The carbon fiber may, for example, be PAN based carbon fiber, isotropic pitch-based carbon fiber or anisotropic pitch-based carbon fiber. As the shape of the carbon fiber, chopped fiber or milled fiber may be selected depending on the desired physical properties.

The carbon black may, for example, furnace black, acetylene black, thermal black or channel black. Among them, furnace black is preferred. The furnace black may, for example, be HAF-LS carbon, HAF carbon, HAF-HS carbon, FEF carbon, GPF carbon, APF carbon, SRF-LM carbon, SRF-HM carbon or MT carbon, and is preferably MT carbon.

The inorganic filler may be surface-treated with a surface treatment agent such as a silane coupling agent or a titanate coupling agent, with a view to improving dispersibility in the resin.

The polymer filler may, for example, be a thermosetting polyimide, a polyphenylene oxide, a polytetrafluoroethylene, a styrene/maleic anhydride copolymer, a styrene/phenylmaleimide copolymer, an ethylene/acrylic acid/glycidyl methacrylate copolymer, a silicone elastomer or an aramid. In a case where the dielectric constant or the dielectric loss tangent of the formed product is to be reduced, a polytetrafluoroethylene is suitable.

The plasticizer may, for example, be a phthalic acid ester or an adipic acid ester.

The flame retardant may, for example, be aluminum hydroxide, magnesium hydroxide, magnesium carbonate, antimony trioxide, sodium antimonate, antimony pentoxide, a phosphazene compound, a phosphoric acid ester (triphenyl phosphate, tricresyl phosphate, trixylenyl phosphate, cresylphenyl phosphate, 2-ethylhexyl diphenyl phosphate, etc.), ammonium polyphosphate, melamine/melam/melem polyphosphate, red phosphorus, a molybdenum compound, a boric acid compound or a polytetrafluoroethylene.

### (Composition)

The content of the fluorinated polymer is, to the total mass of the fluorinated polymer and the non-fluorinated thermoplastic resin being 100 mass%, preferably 1 to 40 mass%, more preferably 5 to 35 mass%, further preferably 10 to 30 mass%.

When the content of the fluorinated polymer is the lower limit of the above range or higher, properties due to the fluorinated polymer are likely to be achieved.

When the content of the fluorinated polymer is the upper limit of the above range or lower, the HF gas generation amount tends to be reduced. Further, properties due to the non-fluorinated thermoplastic resin are likely to be achieved.

The content of the non-fluorinated thermoplastic resin is, to the total mass of the fluorinated polymer and the non-fluorinated thermoplastic resin being 100 mass%, preferably 1 to 99 mass%, more preferably 50 to 95 mass%, further preferably 70 to 90 mass%.

When the content of the non-fluorinated thermoplastic resin is the lower limit of the above range or higher, properties due to the non-fluorinated thermoplastic resin are likely to be achieved. Further, the HF gas generation amount tends to be reduced.

When the content of the non-fluorinated thermoplastic resin is the upper limit of the above range or lower, properties due to the fluorinated polymer are likely to be achieved.

The content of the inorganic compound is, to the total mass of the fluorinated polymer and the non-fluorinated thermoplastic resin being 100 mass%, preferably 0.01 to 10 mass%, more preferably 0.05 to 8 mass%, further preferably 0.1 to 5 mass%.

When the content of the inorganic compound is the lower limit of the above range or higher, more excellent heat resistance will be achieved, and the HF gas generation amount can further sufficiently be reduced. When the content of the inorganic compound is the upper limit of the above range or lower, foaming is less likely to occur, and the outer appearance will hardly be impaired.

### (Properties of resin composition)

The HF gas generation amount of the resin composition is preferably 200 ppm or less, more preferably 150 ppm or less, further preferably 100 ppm or less. When the HF gas generation amount is the upper limit of the above range or less, the HF gas generation amount is considered to be sufficiently reduced.

With respect to the HF gas generation amount of the resin composition, generally, the higher the heating temperature, the larger the HF out gas amount. Accordingly, when the HF out gas amount at 400°C is 200 ppm or less, it is predicted that the HF out gas amount at 380°C is also 200 ppm or less. From the same reason, when the HF out gas amount at 380°C is larger than 200 ppm, it is predicted that the HF out gas amount at 400°C is also larger than 200 ppm.

The 1% heat loss temperature T_{1%} of the resin composition is preferably 450°C or higher, more preferably 455°C or higher, further preferably 460°C or higher. When the 1% heat loss temperature T_{1%} of the resin composition is the lower limit of the above range or higher, the resin composition and the resulting formed product will be more excellent in heat resistance.

The 5% heat loss temperature T_{5%} of the resin composition is preferably 470°C or higher, more preferably 474°C or higher, further preferably 478°C or higher. When the 5% heat loss temperature T_{5%} of the resin composition is the lower limit of the above range or higher, the resin composition and the resulting formed product will be more excellent in heat resistance.

The melt flow rate (MFR) of the resin composition is preferably 1 to 300 g/10 min, more preferably 2 to 150 g/10 min, further preferably 3 to 100 g/10 min. When MFR of the resin composition is the lower limit of the above range or higher, the resulting formed product will have favorable tensile elongation and flexibility. When MFR of the resin composition is the upper limit of the above range or lower, the resulting formed product will have favorable tensile strength.

### (Production of resin composition)

The resin composition of the present invention may be produced, for example, by preliminarily mixing the respective components by a mixing machine such as a tumbler or a Henschel mixer and melt-kneaded the mixture by e.g. a Banbury mixer, a roller, Brabender, a single screw extruder, a twin screw extruder or a kneader.

Otherwise, the respective components not preliminarily mixed or some of which preliminarily mixed, are supplied to an extruder using a feeder and melt-kneaded. Or, some components may be preliminarily mixed, supplied to an extruder and melt-kneaded, and the resulting resin composition as a master batch and the remaining components are mixed and melt-kneaded.

The conditions for the melt-kneading, such as the temperature, the shear rate and the retention time are not particularly limited and may properly be set depending upon the components.

### (Function and mechanism)

The above-described resin composition of the present invention contains an inorganic compound having an average particle size D50 of less than 4.5 µm and having neither of carbon atom nor hydrogen atom. Accordingly, the acid-receiving function by the inorganic compound having a relatively small particle size tends to be intense, and the efficiency for capturing an acidic gas such as a HF gas by the inorganic compound tends to be high. As a result, the HF gas generation amount at the time of heat-forming the resin composition will be reduced.

In addition, the present inventors have found that by using the inorganic compound having a relatively small particle size, heat resistance also unexpectedly improve. The detailed mechanism of the effect to improve heat resistance by the inorganic compound is unclear, but is considered as follows. In the resin composition of the present invention, since the particle size of the inorganic compound is relatively small, the activity for capturing fluorine radicals to be generated at high temperature is also high, and accordingly fluorine radicals are likely to disappear. Accordingly, the decrease in the fluorine radical amount contributes to thermal stability, and thus the resin composition and the resulting formed product are excellent in heat resistance.

### (Application)

The resin composition of the present invention may be powdered to be used as a coating material. Examples of the application of a coated article include ones as described in WO2015/182702.

Further, the resin composition of the present invention is useful also as an additive for a fiber-reinforced resin formed product or a matrix resin of a prepreg.

The reinforcing fiber to be used for the fiber-reinforced resin formed product and the prepreg is not particularly limited. For example, various inorganic fibers, various metal fibers and various organic fibers may be mentioned.

In addition, the resin composition of the present invention is suitably used for applications described in JP-A-2018-203979.

### (Formed product)

The resin composition of the present invention is suitably applicable as a formed product. The formed product of the resin composition of the present invention is excellent in heat resistance and is therefore preferably used for applications for which heat resistance is required.

The formed product is obtained by heat-forming the resin composition of the present invention. It is preferred to heat-form the resin composition at high temperature of 230°C or higher to obtain a formed product, since it is more meaningful to reduce the HF gas generation which is likely to occur at higher temperature.

The heat forming method is not particularly limited, and various forming methods are applicable. For example, melt forming and lamination forming may be mentioned.

Melt forming may, for example, be injection molding, extrusion or press molding (thermoforming).

Injection molding may, for example, be conventional injection molding, high-speed injection molding, multiple color injection molding, co-injection molding, injection compression molding, gas-assisted injection molding, structural foam injection molding (MUCELL), heat and cool injection molding using a rapidly heated mold, insert molding, or in-mold decoration molding.

Extrusion may, for example, be film/sheet extrusion using a T die, tube extrusion using a circular die, profile extrusion, melt spinning, and blow molding for forming hollow members. A multilayered formed product of two or more layers, or multilayered fibers having a core/sheath structure may be obtained by extrusion.

Press forming is a method of heat-forming a monolayer or multilayer sheet.

As lamination forming, 3D printing and a forming method called additive manufacturing are widely used. For example, fused deposition modeling and selective laser sintering may be mentioned.

The formed product of the present invention may be combined or laminated with another material other than the formed product of the present invention to be used as a composite. Another material may, for example, be a metal, glass, a plastic or a rubber.

Specific examples of a plastic include ones described in WO2015/182702, a liquid crystal polymer, a polyaryl ketone, a polyether sulfone, a polyphenylsulfone, a polyacetal and a polyurethane. Examples of a polyamide include polyamide 6, polyamide 66, polyamide 46, polyamide 11, polyamide 12, polyamide 610, polyamide 612, a polyamide 6/66 copolymer, a polyamide 6/66/610 copolymer, polyamide MXD6, polyamide 6T, polyamide 9T and a polyamide 6/6T copolymer.

The form and the application of the molded product and the composite may, for example, be specifically a housing of a mobile electronic device, a connecting member for a mobile electronic device, a sliding member, a three-dimensional electronic circuit component, a gear, an actuator, a piston, a bearing, an aircraft interior material, a bush, a tube (for fuel, etc.), a hose, a tank, a seal, a wire, an insulating coating material for an electric wire (a wire, a cable, etc.), a film, a sheet, a bottle or a fiber.

The mobile electronic device may, for example, be a cellphone, a mobile terminal, a laptop computer, a tablet computer, a radio, a camera, an accessory for a camera, a watch, a calculator, a music player, GPS, a portable game, a hard drive, a mobile memory device, a mobile reproducing device or a mobile radio receiver.

The form of the hosing of the mobile electronic device may, for example, be a back cover of the mobile electronic device, a front cover, an antenna housing, a frame or a backbone. The housing may be a member consisting of only one component of the formed product of the present invention or may be a member comprising plural components. Here, the backbone is a member to which a component of the mobile electronic device such as electronics, microprocessor, a screen, a keyboard, a keypad, an antenna or a battery socket is fixed.

In a case where the housing is in the inside of the mobile electronic device, the housing cannot be viewed from the outside of the mobile electronic device in some cases and can be partially viewed from the outside of the mobile electronic device in the other cases. The housing such as a cover for protecting or supporting an internal structure may be exposed to the outside of the mobile electronic device.

The form of the connecting member for the mobile electronic device may, for example, be a snap connector to a circuit board, a microphone, a speaker, a display, a battery, a cover, an electric connector, an electronic connector, a hinge, an antenna, a switch or a switch pad for the mobile electronic device, etc. The connecting member can be preferably used for mobile electronic devices such as a cellphone, a PDA, a music memory device, a bugging device, a mobile DVD player, an electric multimeter, a mobile electronic game device and a mobile personal computer (such as a notebook computer).

The three-dimensional electronic circuit component is a resin component formed into a three-dimensional shape and having a circuit pattern formed on its surface and is used as an antenna component for a mobile electronic device or a component for an onboard electronic apparatus. As a method of forming a circuit pattern, laser direct structuring (LDS) method of etching a circuit pattern by laser, followed by plating, is used. The formed product of the present invention is excellent in low dielectric properties and suitably applicable to a three-dimensional electronic circuit component.

Applications of the tube, hose, tank, seal and wire may, for example, be the applications as described in WO2015/182702. In addition, applications of the tube and hose may, for example, be tubes for energy resource drilling for oil, natural gas, shale oil, etc.

Applications of the insulating coating material for electric wires may, for example, be an insulating coating material for an electric wire or for a rectangular copper wire for a motor coil, particularly for a rectangular conductor in a drive motor of a hybrid vehicle (HEV) or an electric vehicle (EV). As the form of the insulating coating material for the rectangular conductor, a film may be mentioned.

As the application of the insulating coating material for electric wires, for example, an insulating coating material for downhole cables for energy resource (oil, natural gas, shale oil, etc.) drilling may also be mentioned. Among them, an insulating coating material for downhole cables for oil drilling is preferred.

Applications of the film and sheet may, for example, be a speaker diaphragm, a plate for external damage/fractures, an insulating paper such as an adhesive tape for various electrical insulation (motor insulating paper, etc.), a sealing tape for oil/natural gas pipes, etc., or a release film.

In a case where the molded product is a film, its application may be a speaker diaphragm provided with a film, a film for coating electric wire, a flexible printed board, a rigid substrate, a coverlay, an electronic equipment housing, a heat-resistant roll for an OA equipment or a film for film impregnation of another fiber composite material. The thickness of the film is preferably from 1 to 100 µm, more preferably from 2 to 80 µm, further preferably from 5 to 50 µm. When the thickness of the film is the lower limit of the above range or more, the strength of the film improves. When the thickness of the film is the upper limit of the above range or less, the film will be excellent in handling efficiency.

In a case where the formed product is a tube, its application may be a medical catheter equipped with a tube, a wire coating or piping for an analytical instrument.

In a case where the formed product is a fiber, its application may be protective clothing or various filters.

### EXAMPLES

Now, the present invention will be described in further detail with reference to Examples. However, it should be understood that the present invention is by no means restricted thereto. Ex. 1 to 3 and 8 to 10 are Examples of the present invention, and Ex. 4 to 7 and 11 to 21 are Comparative Examples.

### <Measurement method, evaluation method>

### (Average particle size D50)

Using laser diffraction/scattering particle size distribution analyzer ("LA-920 measuring apparatus" manufactured by HORIBA, Ltd.), the inorganic compound was dispersed in water to measure the particle size distribution thereby to calculate the average particle size D50 (µm).

### (Melting point)

Using a differential scanning calorimeter ("DSC7020" manufactured by Hitachi High-Tech Science Corporation), a melting peak when a sample was heated at a rate of 10°C/min was recorded, and the temperature (°C) corresponding to the maximum value of the melting peak was taken as the melting point.

### (Melt flow rate)

Measured by using melt indexer (manufactured by TECHNOL SEVEN CO., LTD.) in accordance with JIS K 7210-1:2014 (corresponding International Organization for Standardization ISO 1133-1:2011) at a temperature of 372°C under a load of 49N.

### (Mooney viscosity (ML₁₊₁₀, 121°C))

Measured by using SMV-201 (manufactured by Shimadzu Corporation) in accordance with JIS K 6300-1:2000 (corresponding International Organization for Standardization ISO 289-1:2005, ISO 289-2:1994) at 121°C.

### (Storage elastic modulus G')

Measured by using RPA2000 (manufactured by Alpha Technologies) in accordance with ASTM D6204 at 100°C under 50 cpm.

### (HF gas generation amount)

1 g of resin composition pellets in each Ex. were heated at 380°C or 400°C respectively for 30 minutes. The HF out gas generated was adsorbed in an absorbent, fluoride ions (F⁻) contained in the adsorbent which had absorbed the HF out gas was determined by ion chromatography to obtain the HF out gas amount.

Ion chromatography conditions are shown below.
- Apparatus: "ICS-3000", manufactured by Dionex
- Carrier gas: air
- Gas flow rate: 500 ml/min
- Adsorbent: pure water 30 ml×2 in series

The HF gas generation amount was evaluated based on the following standards.
A: HF out gas amount being 0 to 100 ppm.
B: HF out gas amount being more than 100 ppm and 200 ppm or less.
C: HF out gas amount being more than 200 ppm.

### (Heat resistance)

The 1% heat loss temperature T_{1%} and the 5% heat loss temperature T_{5%} in air atmosphere at a heating rate of 10°C/min were respectively measured in accordance with JIS K7120.

### (Coloring)

The sample was visually confirmed, and one which has colored was rated as "colored" and one which has not as "nil".

### <Material>

· fluorinated polymer 1: fluorinated elastomer with a molar ratio of TFE units and P units (TFE:P) being 56:44 (melt flow rate: 11 g/10 min, specific gravity: 1.55, Mooney viscosity (ML₁₊₁₀, 121°C): 100, storage elastic modulus G': 390).
· fluorinated polymer 2: fluorinated resin with a molar ratio of TFE units, ethylene units and CH₂=CHC₄F₉ units (TFE:E:C4) being 54:46:1.4 (melt flow rate: 11 g/10 min, melting point: 260°C, specific gravity: 1.7).
· fluorinated polymer 3: a fluorinated resin with a molar ratio of TFE units and PPVE units (TFE:PPVE) being 98.1:1.9 (melt flow rate: 25 g/10 min, melting point: 310°C, specific gravity: 2.1).
· non-fluorinated thermoplastic resin 1: PEEK (manufactured by Daicel-Evonik Ltd., tradename: "VESTAKEEP3300G", melting point: 343°C, melt flow rate: 21 g/10 min, specific gravity: 1.30).
· non-fluorinated thermoplastic resin 2: PPS (manufactured by Solay Specialty Polymers, tradename: "Ryton QC-160P", melting point: 280°C).
· inorganic compound 1: magnesium oxide having an average particle size D50 of 0.7 µm (manufactured by Kyowa Chemical Industry Co., Ltd., tradename: "Kyowamag MF150", purity: 99.4%, BET specific surface area: 135 m²/g).
· inorganic compound 2: magnesium oxide having an average particle size D50 of 4.5 µm (manufactured by Kyowa Chemical Industry Co., Ltd., tradename: "Kyowamag 150", purity: 97.9%, BET specific surface area: 155 m²/g).
· inorganic compound 3: hydrotalcite having an average particle size D50 of 0.5 µm (manufactured by Kyowa Chemical Industry Co., Ltd., tradename: "DHT-4A", BET specific surface area: 10.1 m²/g).
· inorganic compound 4: magnesium aluminum oxide having an average particle size D50 of 0.4 µm (manufactured by Kyowa Chemical Industry Co., Ltd., tradename: "KW-2200", BET specific surface area: 190 m²/g).

### <Ex. 1 to 7>

The non-fluorinated thermoplastic resin 1, the fluorinated polymer 1 and the inorganic compound 1, the inorganic compound 2 or the inorganic compound 3 were mixed in the blend ratio as identified in Table 1 and put into the base end of the screws of a twin screw extruder (manufactured by TECHNOVEL CORPORATION, KZW15TW-45HG1100, screw diameter: 15 mm, L/D: 45) by a feeder at a rate of 2.0 kg/hour. Strands extruded from the tip of the die under conditions of screw speed: 200 rpm, set temperatures of cylinder, die and head: C1=340°C, C2=360°C, C3=370°C, C4=370°C, C5=370°C, C6=360°C, D=350°C, H=350°C, were cooled in a water bath and cut by a pelletizer to obtain pellets of the resin composition. The resin composition in each Ex. was evaluated with respect to the HF gas generation amount, heat resistance and coloring. The results are shown in Table 1.

**Table 1**

| | | Ex.1 | Ex.2 | Ex.3 | Ex.4 | Ex.5 | Ex.6 | Ex.7 |
|---|---|---|---|---|---|---|---|---|
| Non-fluorinated thermoplastic resin 1 (mass%) | | 80 | 80 | 80 | 80 | 80 | 80 | 80 |
| Fluorinated polymer 1 (mass%) | | 20 | 20 | 20 | 20 | 20 | 20 | 20 |
| Inorganic compound 1 (parts by mass) | | 0.3 | 1 | 3 | | | | |
| Inorganic compound 2 (parts by mass) | | | | | 0.3 | 1 | | |
| Inorganic compound 3 (parts by mass) | | | | | | | 0.3 | |
| HF gas generation amount | 380°C | - | - | - | C | C | - | C |
| | 400°C | B | A | A | - | - | C | - |
| Heat resistance | T_{5%} | 478 | 484 | - | 474 | - | - | 469 |
| | T_{1%} | - | 461 | 460 | - | - | 435 | 448 |
| Coloring | | Nil | Nil | Nil | Nil | Nil | Nil | Nil |

In the blend ratio shown in Table 1, the unit "mass%" for the non-fluorinated thermoplastic resin 1 and the fluorinated polymer 1 is the mass proportion to the total mass of the fluorinated polymer 1 and the non-fluorinated thermoplastic resin 1 being 100 mass%.

Further, "parts by mass" of the inorganic compound 1, the inorganic compound 2 and the inorganic compound 3 is the mass ratio to the total mass of the fluorinated polymer 1 and the non-fluorinated thermoplastic resin 1 being 100 parts by mass.

With the resin composition in each of Ex. 1 to 3, the HF gas generation amount at 400°C was reduced to 200 ppm or smaller. Since the higher the heat forming temperature is, the larger the HF gas generation amount tends to be, and thus it is predicted that with the resin composition in each of Ex. 1 to 3, the HF gas generation amount at 380°C will be 200 ppm or less. Further, of the resin composition in each of Ex. 1 to 3, T_{5%} or T_{1%} was 450°C or higher, thus indicating excellent heat resistance.

The resin composition in each of Ex. 4 and 5 contains an inorganic compound 2 having an average particle size D50 of 4.5 µm. In Ex. 4 and 5, the HF gas generation amount at 380°C was so large as larger than 200 ppm. Further, of the resin composition in Ex. 4 containing the inorganic compound 2 having an average particle size D50 of 4.5 µm, as compared with the resin composition in Ex. 1, T_{5%} was low, thus indicating low heat resistance.

The resin composition in Ex. 6 contains an inorganic compound 3 having hydrogen atoms. In Ex. 6, the HF gas generation amount at 400°C was so large as larger than 200 ppm. Further, in Ex. 6, T_{1%} was so low as 435°C, thus indicating poor heat resistance.

The resin composition in Ex. 7 contains no inorganic compound. In Ex. 7, the HF gas generation amount at 380°C was so large as larger than 200 ppm. Further, in Ex. 7, T_{5%} and T_{1%} were lower than in Ex. 1 and 3, thus indicating poor heat resistance.

In Ex. 1 to 7, no coloring was observed.

### (Ex. 8 to 21)

In the same manner as in Ex. 1 to 7, the respective components were mixed in a blend ratio as identified in Table 2 to obtain pellets of the resin composition. The resin composition in each Ex. was evaluated with respect to the HF gas generation amount, heat resistance and coloring. The results are shown in Table 2.

**Table 2**

| | | Ex.8 | Ex.9 | Ex. 10 | Ex. 11 | Ex. 12 | Ex. 13 | Ex. 14 | Ex.15 | Ex. 16 | Ex. 17 | Ex. 18 | Ex. 19 | Ex.20 | Ex.21 |
|---|---|---|---|---|---|---|---|---|---|---|---|---|---|---|---|
| Non-fluorinated thermoplastic resin 2 (mass%) | | 90 | 80 | 70 | | | | | | | | | 90 | 80 | 70 |
| Fluorinated polymer 1 (mass%) | | 10 | 20 | 30 | | | | | | 100 | | | 10 | 20 | 30 |
| Fluorinated polymer 2 (mass%) | | | | | 100 | 100 | 100 | | | | 100 | | | | |
| Fluorinated polymer 3 (mass%) | | | | | | | | 100 | 100 | | | 100 | | | |
| Inorganic compound 1 (parts by mass) | | 0.1 | 0.3 | 0.7 | | 1.0 | 3.1 | 0.3 | 1.0 | | | | | | |
| Inorganic compound 4 (parts by mass) | | | | | 3.1 | | | | | | | | | | |
| HF gas generation amount | 350°C | A | A | A | A | B | A | A | A | C | C | C | C | C | C |
| | 380°C | - | - | - | - | - | A | C | A | C | C | C | C | C | C |
| Heat resistance | T₅% | 488 | 480 | 475 | - | - | - | - | - | - | - | - | 483 | 470 | 465 |
| | T_{1%} | 457 | 448 | 440 | - | - | - | - | - | - | - | - | 452 | 443 | 438 |
| Coloring | | Nil | Nil | Nil | Colored | Colored | Colored | Colored | Colored | Nil | Nil | Nil | Nil | Nil | Nil |

In the blend ratio shown in Table 2, the unit "mass%" for the non-fluorinated thermoplastic resin 2 and the fluorinated polymers 1 to 3 is the mass proportion to the total mass of the fluorinated polymers 1 to 3 and the non-fluorinated thermoplastic resin 2 being 100 mass%.

Further, "parts by mass" of the inorganic compound 1 and the inorganic compound 4 is the mass ratio to the total mass of the fluorinated polymers 1 to 3 and the non-fluorinated thermoplastic resin 2 being 100 parts by mass.

With the resin composition in each of Ex. 8 to 10, the HF gas generation amount at 350°C was reduced to 100 ppm or smaller. Further, of the resin composition in each of Ex. 8 to 10, T_{5%} was 470°C or higher, thus indicating excellent heat resistance.

The resin composition in each of 11 to 15 was colored.

With the resin composition in each of 16 to 18, the HF gas generation amount at 350°C or 380°C was so large as larger than 200 ppm.

The resin compositions in 19 to 21 are different from the resin compositions in corresponding Ex. 8 to 10 only in that they contained no inorganic compound 1. With the resin composition in each of 19 to 21, the HF gas generation amount at 350°C or 380°C was so large as larger than 200 ppm. Further, of the resin compositions in Ex. 19 to 21, as compared with the resin compositions in corresponding Ex. 8 to 10, T_{5%} or T_{1%} was low, thus indicating low heat resistance.

### INDUSTRIAL APPLICABILITY

The resin composition of the present invention is excellent in heat resistance, can reduce the HF gas generation amount at the time of heat forming, and will not be colored.

The formed product of the present invention generates less HF gas when produced by heat forming, is excellent in heat resistance and will not be colored.

The composite of the present invention has a formed product excellent in heat resistance.

The entire disclosure of Japanese Patent Application No. 2021-185690 filed on November 15, 2021 including specification, claims, drawings and summary is incorporated herein by reference in its entirety.

## Claims

1. A resin composition comprising a fluorinated polymer, a non-fluorinated thermoplastic resin and an inorganic compound,
wherein the inorganic compound has an average particle size D50 of less than 4.5 µm, and
the inorganic compound has neither carbon atom nor hydrogen atom.

2. The resin composition according to Claim 1, wherein the content of the inorganic compound is 0.01 to 10 mass% to the total mass of the fluorinated polymer and the non-fluorinated thermoplastic resin.

3. The resin composition according to Claim 1 or 2, wherein the fluorinated polymer is a melt-formable fluorinated resin, and the fluorinated resin has a melting point of 230°C or higher.

4. The resin composition according to Claim 1 or 2, wherein the fluorinated polymer is a fluorinated elastomer.

5. The resin composition according to any one of Claims 1 to 4, wherein the non-fluorinated thermoplastic resin is at least one member selected from a polyamide, a polyphenylene sulfide, a polysulfone, a thermoplastic polyimide, a polyetherimide, a polycarbonate, a liquid crystal polymer, a polyarylate and a polyaryl ether ketone.

6. The resin composition according to any one of Claims 1 to 5, wherein the non-fluorinated thermoplastic resin is a polyaryl ether ketone.

7. The resin composition according to any one of Claims 1 to 6, wherein the non-fluorinated thermoplastic resin has a melting point of 230°C or higher.

8. The resin composition according to any one of Claims 1 to 7, wherein the non-fluorinated thermoplastic resin has a melting point of 250°C or higher.

9. The resin composition according to any one of Claims 1 to 8, wherein the inorganic compound has a BET specific surface area of 100 m²/g or more.

10. The resin composition according to any one of Claims 1 to 9, wherein the inorganic compound is magnesium oxide, and the purity of the magnesium oxide is 98% or higher.

11. The resin composition according to any one of Claims 1 to 10, wherein the content of the fluorinated polymer is 1 to 40 mass% to the total mass of the fluorinated polymer and the non-fluorinated thermoplastic resin.

12. The resin composition according to any one of Claims 1 to 11, wherein the following HF gas generation amount is 200 ppm or less:
HF gas generation amount: the HF out gas amount generated when 1 g of the resin composition is heated at a temperature of 380°C or 400°C for 30 minutes, measured by ion chromatography.

13. The resin composition according to any one of Claims 1 to 12, wherein the 1% heat loss temperature T_{1%} is 450°C or higher, and the 5% heat loss temperature T_{5%} is 470°C or higher, measured in accordance with JIS K7120.

14. A formed product obtained by heat-forming the resin composition as defined in any one of Claims 1 to 13.

15. A composite, comprising the formed product as defined in Claim 14 combined or laminated with another material other than the formed product.
